# EUROPEAN PATENT SPECIFICATION

(11) **EP 2 191 173 B1**
(45) Date of publication and mention of the grant of the patent: **12.10.2011**
(21) Application number: 07786942.8
(22) Date of filing: 29.06.2007
(51) Int. Cl.: F16H 61/662

(54) **CONTROL SYSTEM FOR A CONTINUOUSLY VARIABLE TRANSMISSION**
STEUERSYSTEM FÜR EIN STUFENLOSES GETRIEBE
SYSTÈME DE COMMANDE POUR TRANSMISSION À RÉGLAGE CONTINU

(43) Date of publication of application: 02.06.2010
(73) Proprietor: Robert Bosch GmbH, 70442 Stuttgart (DE)
(72) Inventor: VAN DER SLUIS, Francis Maria Antonius, NL-5271 HP Sint-Michielsgestel (NL); VAN WIJK, Wilhelmus Johannes Maria, NL-5071 AN Udenhout (NL)
(74) Representative: Plevier, Gabriel Anton Johan Maria
(86) International application number: PCT/EP2007/056582
(87) International publication number: WO 2009/003511

(56) References cited:
- EP-A- 0 229 900
- EP-A- 1 186 806
- WO-A-2007/013792
- DE-A1- 3 900 204
- DE-A1- 4 331 266
- US-A1- 2003 199 345

## Description

The present invention relates to a control system for a continuously variable transmission as defined in the preamble of the following claim 1.

Such a control system and transmission are known, for example from the International patent application published as WO-A-2007/013792 that relates to a control method for a specific layout of the control system. The known continuously variable transmission includes a primary or drive variable pulley and a secondary or driven variable pulley, as well as an endless transmission element or drive belt, which may be one of several known types, wrapped around and in frictional contact with the said pulleys. The transmission provides a transmission speed ratio between the primary and secondary pulleys that may be controlled to an arbitrary value within a range of speed ratios covered by the transmission through an appropriate actuation of the said variable pulleys by means of the control system of the transmission. More in particular, each pulley comprises two sheaves where between the drive belt is held and whereof one sheave is arranged axially moveable along a respective pulley shaft under the influence of an actuation means of the control system.

The actuation means of the known control system includes two pressure cylinders, each associated with a respective one of the said moveable pulley sheaves. Further, the control system includes hydraulic means for realising, in a controlled manner, a pressure level in the pressure cylinder associated with the primary pulley, which cylinder pressure is denoted the primary pressure hereinafter, and for realising, also in a controlled manner, a pressure level in the pressure cylinder associated with the secondary pulley, which cylinder pressure is denoted the secondary pressure hereinafter. These cylinder pressures determine the clamping forces respectively exerted on the drive belt between the sheaves of each pulley and as a consequence the said speed ratio, as well as the torque that can be transmitted by the transmission.

The known hydraulic means comprises the following components:
- a hydraulic pump for supplying a flow of fluid to a main hydraulic line,
- an adjustable line pressure valve capable of controlling the fluid pressure in the main hydraulic line to a desired level, which pressure level is denoted the line pressure hereinafter,
- an adjustable primary pressure valve, interposed between the main hydraulic line and a primary hydraulic branch connected to the pressure cylinder associated with the primary pulley and capable of controlling the primary pressure between a first minimum pressure level and the line pressure,

- an adjustable secondary pressure valve, interposed between the main hydraulic line and a secondary hydraulic branch connected to the pressure cylinder associated with the secondary pulley and capable of controlling the secondary pressure in-between a second minimum pressure level and the line pressure,
- line pressure valve control means for adjusting the line pressure valve such that the actually prevailing line pressure level coincides with a desired value,
- primary pressure valve control means for adjusting the primary pressure valve such that the actually prevailing primary pressure level coincides with a desired value and
- secondary pressure valve control means for adjusting the primary secondary valve such that the actually prevailing secondary pressure level coincides with a desired value.

According to WO-A-2007/013792, the desired line pressure is set to coincide with the highest one of the desired primary pressure and the desired secondary pressure, whereby the primary or the secondary pressure valve that is associated with such respectively highest cylinder pressure is adjusted to a fully open condition, i.e. providing an at least virtually unrestricted hydraulic connection. Thus the line pressure alternately serves as either the primary or the secondary pressure, in dependence on such respective cylinder pressure being higher than the other one. Such highest cylinder pressure is at that time controlled not by its respective, i.e. primary or secondary pressure valve and associated control means, but by the line pressure valve and the line pressure valve control means instead.

Although WO-A-20071013792 provides for an effective and also efficient control method, it still relies on a conventional layout of the control system. The present invention aims to optimise the control system of the known continuously variable transmission in relation to the afore-mentioned known control method such that it is specifically tailored thereto, preferably the cost of the system is reduced thereby.

According to the invention this aim is realised by the control system of claim 1 attached hereto. According to the invention, since only one of the primary and the secondary pressures is actively controlled by its respective valve and associated valve control means at a time, these valve and valve control means can actually be shared between them, i.e, in principle a single cylinder pressure valve control means, or even a single cylinder pressure valve suffices for the control of both said cylinder pressures. The respective other, i.e. highest, cylinder pressure thus being controlled by the line pressure valve under the influence of the line pressure valve control means.

Thus, in the above-described control systems in accordance with the present invention a switch is provided for connecting the single cylinder pressure valve control means alternatively to either the primary pressure valve or the secondary pressure valve.

More in particular, the switch is in the form of a hydraulic switch valve.

It is noted that EP-A-1 186 808 discloses a control system that is provided with two pressure regulator valves. A first regulator valve is used to set a relatively high pressure level PH and a second regulator valve is used to set a relatively low pressure level PL, which pressure levels PH, PL are changeably supplied one and the other of the pressure cylinder associated with the primary pulley and of the pressure cylinder associated with the secondary pulley via a shift control or switch valve.

The invention will now be elucidated further along a drawing in which:
figure 1 is a diagrammatic representation of the known control system as part of a schematically depicted continuously variable transmission that is actuated thereby;
figure 2 is a graph that illustrates the pressures set-points determined by the valve control means when operated in accordance with the known control method;
figure 3 diagrammatically illustrates a first possible embodiment of hydraulic means of the control system according to the present invention;
figure 4 diagrammatically illustrates a second possible embodiment of hydraulic means of the control system according to the present invention; and
figure 5 represents an hydraulic switch valve suitable for the present invention.

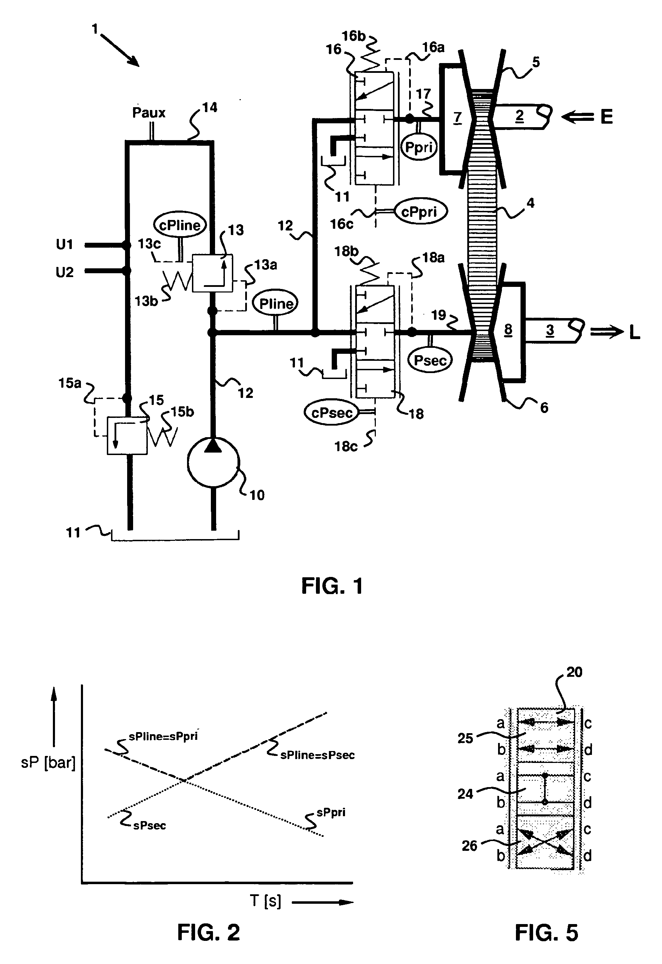

Figure 1 schematically shows a continuously variable transmission 1, for realising and changing a transmission speed ratio between an input or primary shaft 2 and an output or secondary shaft 3 of the transmission 1, which comprises a control system for the actuation of the transmission 1 including any auxiliary functions thereof. Such auxiliary functions are schematically indicated as the hydraulic users U1, U2, which may, for instance, represent a clutch or a lubrication point of the transmission 1. The transmission 1 is intended to be incorporated between an engine E and a load L, for example in a motor vehicle, for varying the transmission speed ratio there between within a continuous range of possible ratios.

The transmission 1 further comprises an endless flexible belt 4 that is wrapped around and between a primary pulley 5 placed on the primary shaft 2 and secondary pulley 6 placed on the secondary shaft 3. The belt 4 is frictionally engaged with the pulley sheaves of the respective pulleys 5, 6 by means of clamping forces, respectively generated by a hydraulic pressure exerted in a primary pressure cylinder 7 associated with an axially moveable sheave of the primary pulley 5, i.e. the primary pressure Ppri, and by a hydraulic pressure exerted in a secondary pressure cylinder 8 associated with an axially moveable sheave of the secondary pulley 6, i.e. the secondary pressure Psec.

These pressures Ppri, Psec are realised, in a controlled manner, by a hydraulic means of the control system comprising a pump 10, which possibly is also driven by the engine E and which supplies a flow of pressurised hydraulic medium to a main hydraulic line 12 of the hydraulic means. Hereby, such medium is drawn from a reservoir 11 for hydraulic medium, also denoted an oil sump 11. The pressure level in this main line 12, i.e. the line pressure Pline, is controllable by an adjustable line pressure valve 13. The line pressure valve 13 is provided with generally known valve biasing means, which in this example include a line pressure feedback line 13a, a spring 13b and a line pressure control line 13c. By means of a line pressure valve control means (not shown) of the control system a suitable line pressure control pressure cPline can be generated in the line pressure control line 13c, so that, in turn, a line pressure set-point sPline, i.e. a desired level sPline for the line pressure Pline, will be actually realised by the line pressure valve 13 in the main line 12.

The line pressure valve 13 discharges a surplus of the pump flow into an auxiliary hydraulic line 14 from which the auxiliary hydraulic users U1, U2 of the transmission 1 are supplied with hydraulic medium. The pressure level in this auxiliary line 14, i.e. the auxiliary pressure Paux, is controlled by an auxiliary pressure valve 15, usually to a fixed, relatively low pressure level of a few (e.g. 5) bar. To this end, the auxiliary pressure valve 15 is provided with an auxiliary pressure feedback line 15a and a spring 15b. In the embodiment of the control device shown, the auxiliary pressure valve 15 discharges a remaining surplus of the pump flow directly into the oil sump 11.

The primary pressure Ppri can be controlled by means of an adjustable further or primary pressure valve 16 that is interposed between the main line 12 and a primary hydraulic branch 17 connected to the primary pressure cylinder 7. The primary pressure valve 16 is capable of controlling the primary pressure Ppri by selectively allowing the primary pressure cylinder 7 to communicate with the main line 12 for increasing the primary pressure Ppri, or with the oil sump 11 for relieving the primary pressure Ppri. The primary pressure valve 16 is provided with generally known valve biasing means, which in this example include a primary pressure feedback line 16a, a spring 16b and a primary pressure control line 16c. By means of a primary pressure valve control means (not shown) of the control system a suitable primary pressure control pressure cPpri can be generated in the primary pressure control line 16c, so that, in turn, a primary pressure set-point sPpri, i.e. a desired level sPpri for the primary pressure Ppri, will be actually realised by the primary pressure valve 16 in the primary hydraulic branch 17 and the primary cylinder 7.

The secondary pressure Psec is controllable in an analogous manner by means of yet a further adjustable or secondary pressure valve 18 that is interposed between the main line 12 and a secondary hydraulic branch 19 connected to the secondary pressure cylinder 8. The secondary pressure valve 18 is capable of controlling the secondary pressure Psec by selectively allowing the secondary pressure chamber 8 to communicate with the main line 12 for increasing the secondary pressure Psec, or with the oil sump 11 for relieving the secondary pressure Ppri. The secondary pressure valve 18 is provided with generally known valve biasing means, which in this example include a secondary pressure feedback line 18a, a spring 18b and a secondary pressure control line 18c. By means of secondary pressure valve control means (not shown) a suitable secondary pressure control pressure cPsec can be generated in the secondary pressure control line 18c, so that, in turn, a secondary pressure set-point sPsec, i.e. a desired level sPsec for the secondary pressure Psec, will be actually realised by the secondary pressure valve 18 in the secondary hydraulic branch 19 and the secondary cylinder 8.

Figure 2 is a graph that illustrates the relation between the line pressure Pline and the primary pressure Ppri and the secondary pressure Psec respectively, at least when controlled in accordance with a particular control method, which as such is known from WO-A-2007/013792.

In figure 2 on the horizontal axis a time lapse T is indicated, whereas the vertical axis represent the level of the set-point sP for the respectively plotted system pressures, i.e. the line pressure set-point sPline, the primary pressure set-point sPpri and the secondary pressure set-point sPsec. Hereby, the dotted lines indicate a possible, i.e. merely exemplary, course of the primary pressure set-point sPpri and the secondary pressure set-point sPsec in relation to the lapse of time T. The line pressure set-point sPline applied in response thereto is represented by the dashed line and is set equal to the instantaneous highest of the primary and secondary pressure set-points sPpri or sPsec. At the same time the pressure valve 16, 18 that is respectively capable of controlling the said respectively highest pressure level Ppri or Psec is set in a fully opened position, i.e. in a condition that provides an at least virtually unrestricted opening between the main line 12 and the respective hydraulic branch 17, 19. Thus, effectively, by applying this known method, only two valves, i.e. the line pressure valve 13 and one of the primary and the secondary pressure valve 16 or 18, are actively controlled, the respective third valve 18 or 16 being held in the said fully opened condition.

Since in the above method only two of the three pressure control valves are actively used at any one time during operation of the transmission, it is presently suggested that it may be possible to do away with the valve control means of the third valve, or possibly even the with the third valve altogether. The invention thus relates to and provides for a continuously variable transmission with an accordingly modified control system, i.e. that is specifically adapted to the above-described known control method.

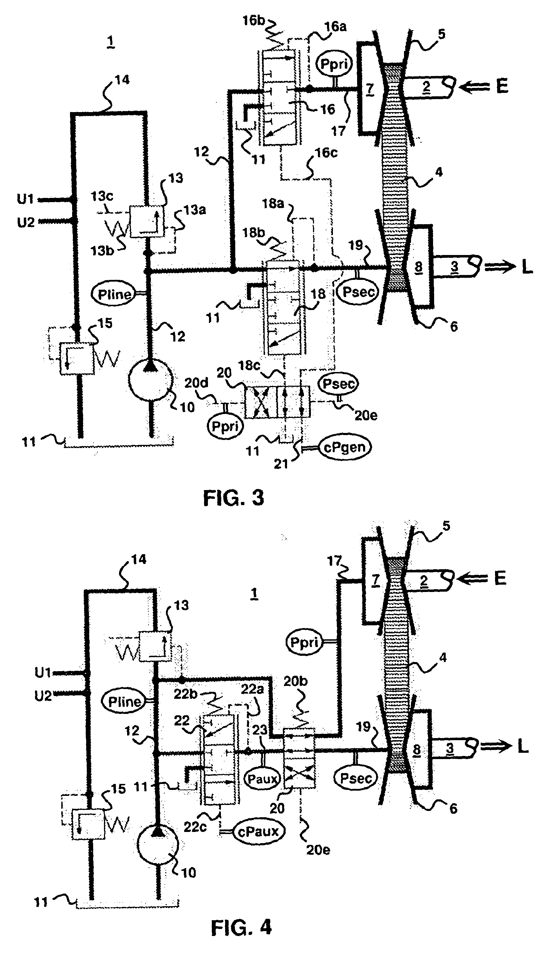

A first embodiment of such a control system according to the present invention is illustrated in figure 3. The hydraulic means of this novel control system include a switch valve 20 and a further hydraulic control line 21. The switch valve 20 is arranged between the further control line 21 and both of the primary pressure control line 16c and the secondary pressure control line 18c, for switching the further control line 21 between the said pressure control lines 16c and 18c selectively making a hydraulic connection with one of them, while connecting the respective other one control line 16c, 18c to the oil sump 11. Hereby, the primary and the secondary pressure valves 16 and 18 and their respective valve biasing means 16a-16c and 18a-18c are designed and arranged such that when the respective control pressure cPpri, cPsec is low, e.g. at ambient pressure, the respective valve 16, 18 provide an at least virtually unrestricted hydraulic connection between the main line 12 and a respective hydraulic branch 17, 19.

In such a novel arrangement of the control system a single, i.e. general valve control means (not shown) is used for generating a suitable general control pressure cPgen that respectively serves as either the primary control pressure cPpri or the secondary control pressure cPsec as determined by the switch valve 20. Thereto, the switch valve 20 is according to the invention to be controlled, i.e. switched, in dependence on the difference between the primary pressure Ppri and the secondary pressure Psec or, alternatively, the difference between the respective set-point values sPpri and sPsec thereof as e.g. represented by the respective control pressures cPpri and cPsec. The control of the switch valve 20 may be effected in various manners that as such will be obvious to those skilled in the art and whereof one is indicated in figure 3. In figure 3 the switch valve 20 is provided with valve biasing means in the form of two hydraulic control lines 20d and 20e that respectively carry the primary pressure Ppri and secondary pressure Psec. Alternatively, as indicated in figure 4, it is possible to provide the valve biasing means in the form of a spring 20b and a hydraulic control line 20e that may carry a control pressure that is either sufficient or insufficient to counteract the force exerted by the spring 20b.

In figure 3 the control system is illustrated in a operational condition wherein the secondary pressure Psec is higher than the primary pressure Ppri. Under the influence of these respective pressure levels Ppri, Psec, the switch valve 20 is set in a condition wherein the secondary pressure control line 18c is connected to the oil sump 11 and the primary pressure control line 16c is connected to the further control line 21. In which condition the said control pressure in the hydraulic control line 20e is thus insufficient to counteract the force of the spring 20b. Accordingly, in figure 3, the primary pressure Ppri is determined by the general control pressure cPgen in the further control line 21 that is generated by the said single valve control means (not shown). Additionally, the secondary pressure valve 18 is set in the said fully open condition wherein the secondary hydraulic branch 19 is connected to the main line 12, such that the secondary pressure Psec coincides with the line pressure Pline.

A second embodiment of such a control system according to the present invention is illustrated in figure 4. The hydraulic means of this novel control system again include a switch valve 20, as well as an intermediary hydraulic line 23. In this embodiment the switch valve 20 is arranged directly between the main line 12 and both of the primary hydraulic branch 17 and the secondary hydraulic branch 19, for selectively switching the main line 12 between the said branches 17 and 19. The switch valve 20 thus alternatively makes a hydraulic connection between the main line 12 and a respectively selected hydraulic branch 17; 19 and simultaneously also connects the respective other one of the hydraulic branches 17 and 19 to a further or auxiliary pressure (control) valve 22 via the intermediary line 23.

The said auxiliary pressure valve 22 is interposed between said intermediary line 23 and the main line 12 and is capable of controlling an auxiliary pressure Paux prevailing in the intermediary line 23 by allowing this line 23 to communicate with the main line 12 for increasing the pressure therein, or with the oil sump 11 for relieving the said pressure. Thereto, the auxiliary pressure valve 22 is provided with known valve biasing means, which in this example include an auxiliary pressure feedback line 22a, a spring 22b and an auxiliary pressure control line 22c. By means of an auxiliary pressure valve control means (not shown) of the control system a suitable auxiliary pressure control pressure cPaux can be generated in the auxiliary pressure control line 22c, so that, in turn, a auxiliary pressure set-point sPaux, i.e. a desired level sPaux for the auxiliary pressure Paux, will be actually realised by the auxiliary pressure valve 22 in the intermediary line 23.

In the above arrangement of the control system and in dependence on the state of the switch valve 20, one, i.e. the higher one, of the primary pressure Ppri and the secondary pressure Psec is equal to the line pressure Pline, whereas the respective other one, i.e. the lower one, of said pressures Ppri, Psec is equal to the said auxiliary pressure Paux. Hereby, the switch valve 20 is provided with valve biasing means in the form of the above-mentioned spring 20b and hydraulic control line 20e.

In such a novel arrangement of the control system, only a single pressure control valve 22 (i.e. the auxiliary pressure valve 22) suffices in addition to the line pressure valve 13 and the switch valve 20 for the control both cylinder pressures Ppri, Psec of the transmission.

In figure 4 the control system is illustrated in an operational condition wherein the primary pressure Ppri is higher than the secondary pressure Psec. By the force exerted by the spring 20b of the switch valve 20, this valve 20 is set in a condition wherein the primary hydraulic branch 17 and thus the primary pressure cylinder 7 is connected to the main line 12 and the secondary hydraulic branch 19 is connected to the intermediary line 23. Accordingly, in figure 4, the primary pressure Ppri coincides with the line pressure Pline and the secondary pressure Psec coincides with the auxiliary pressure Paux, which as such is determined by the auxiliary control pressure cPaux in the auxiliary pressure control line 22c.

Although in figures 3 and 4 the hydraulic switch valve 20 of the present invention is depicted as a discrete switch that instantly switches its respective terminals between the two ultimate switch positions or modes provided thereby, in practice it may be required to include an intermediary valve position or valve mode, wherein all said terminals are at least briefly in mutual hydraulic communication during said switching. Hereby, undesired pressure fluctuations and/or vibrations are suppressed. Such a practical design of the switch valve 20 is schematically represented by figure 5. The valve 20 of figure 5 includes a valve mode or position 24 wherein indeed all four valve terminals a-d are mutually connected, which valve mode 24 is provided in between the two ultimate valve positions 25 and 26 of the switch valve 20. This intermediary valve mode 24 thus provides a smooth transition between the ultimate switch positions 25 and 26 of the valve 20, wherein the valve terminals a-d are not closed off during switching.

## Claims

1. Control system for a continuously variable transmission (1) with an endless transmission element (4) wrapped around and in frictional contact with a primary variable pulley (5) and a secondary variable pulley (6) of the transmission (1), each pulley (5, 6) comprising two sheaves where between the transmission element (4) is held and whereof one is arranged axially moveable along a respective pulley shaft (2, 3) under the influence of an actuation means (7, 8) of the control system that includes a primary pressure cylinder (7) that is associated with the primary pulley (5) and secondary pressure cylinder (8) that is associated with the secondary pulley (6), the control system further including hydraulic means for realising a primary hydraulic pressure (Ppri) in the primary pressure cylinder (7) and a secondary hydraulic pressure (Psec) in the secondary pressure cylinder (8), which hydraulic means comprise:
- a hydraulic pump (10) capable of supplying a flow of fluid to a main hydraulic line (12) of the hydraulic means,
- an adjustable line pressure valve (13) capable of controlling a line pressure (Pline) in the main line (12),
- an adjustable primary pressure valve (16), interposed between the main line (12) and the primary pressure cylinder (7) and capable of controlling the primary pressure (Ppri) and
- an adjustable secondary pressure valve (18), interposed between the main line (12) and the secondary pressure cylinder (8) and capable of controlling the secondary pressure (Psec),
**characterised in that**, the control system further includes:
- a general valve control means for operating a pressure valve of the hydraulic means to determine the pressure level set thereby and
- a switch (20) capable of selectively allowing the general valve control means to operate one of the primary pressure valve (16) and the secondary pressure valve (18).

2. Control system according to claim 1, **characterised in that**, the switch (20) is arranged to be switchable at least in dependence on and more in particular under the influence of an actual or a desired level of both the primary pressure (Ppri; sPprl) and secondary pressure (Psec; sPsec), more in particular the difference there between.

3. Control system according to claim 1 or 2, **characterised in that**, the switch (20) is further capable of effecting that the respective other one of the primary pressure valve (16) and the secondary pressure valve (18) provides a virtually unrestricted hydraulic connection between the main line (12) and the pressure cylinder (7; 8) that is respectively associated with the said other one valve (16; 18).

4. Control system according to claim 1, 2 or 3, **characterised in that**, the switch (20) is provided as a hydraulic valve (20) that is capable of switching a general control pressure (cPgen) generated by the general valve control means between the primary and secondary pressure valves (16, 18).

5. Control system according to claim 4, **characterised in that**, the switch valve (20) is provided with two hydraulic control lines (20d, 20e) that each carry a pressure level that is equal to or representative of the primary pressure (Ppri) and secondary pressure (Psec) respectively.

## Patentansprüche

1. Steuersystem für ein stufenloses Getriebe (1) mit einem Endlosübertragungselement (4), das eine variable Primärriemenscheibe (5) und eine variable Sekundärriemenscheibe (6) des Getriebes (1) umhüllt und in Reibkontakt mit ihnen steht, wobei jede Riemenscheibe (5, 6) zwei Rollen umfasst, zwischen denen das Übertragungselement (4) gehalten wird, und von denen eine unter dem Einfluss eines Betätigungsmittels (7, 8) des Steuersystems axial entlang einer jeweiligen Riemenscheibenwelle (2, 3) beweglich angeordnet ist, wobei das Betätigungsmittel einen Primärdruckzylinder (7), der der Primärriemenscheibe (5) zugeordnet ist, und einen Sekundärdruckzylinder (8), der der Sekundärriemenscheibe (6) zugeordnet ist, enthält, wobei das Steuersystem weiterhin Hydraulikmittel zur Realisierung eines Primärhydraulikdrucks (Ppri) in dem Primärdruckzylinder (7) und eines Sekundärhydraulikdrucks (Psec) in dem Sekundärdruckzylinder (8) enthält, wobei die Hydraulikmittel Folgendes umfassen:
- eine Hydraulikpumpe (10), die einer Haupthydraulikleitung (12) der Hydraulikmittel einen Fluidstrom zuführen kann,
- ein einstellbares Leitungsdruckventil (13), das einen Leitungsdruck (Pline) in der Hauptleitung (12) steuern kann,
- ein einstellbares Primärdruckventil (16), das zwischen der Hauptleitung (12) und dem Primärdruckzylinder (7) angeordnet ist und den Primärdruck (Ppri) steuern kann, und
- ein einstellbares Sekundärdruckventil (18), das zwischen der Hauptleitung (12) und dem Sekundärdruckzylinder (8) angeordnet ist und den Sekundärdruck (Psec) steuern kann,
**dadurch gekennzeichnet, dass** das Steuersystem Folgendes enthält:
- ein allgemeines Ventilsteuermittel zur Betätigung eines Druckventils der Hydraulikmittel zur Bestimmung der **dadurch** eingestellten Druckhöhe und
- einen Schalter (20), der dem allgemeinen Ventilsteuermittel gezielt gestatten kann, das Primärdruckventil (16) oder das Sekundärdruckventil (18) zu betätigen.

2. Steuersystem nach Anspruch 1, **dadurch gekennzeichnet, dass** der Schalter (20) dazu angeordnet ist, mindestens in Abhängigkeit von und insbesondere unter dem Einfluss einer Ist- oder einer Sollhöhe sowohl des Primärdrucks (Ppri; sPri) und eines Sekundärdrucks (Psec; sPsec), insbesondere der Differenz zwischen ihnen, geschaltet werden zu können.

3. Steuersystem nach Anspruch 1 oder 2, **dadurch gekennzeichnet, dass** der Schalter (20) weiterhin in der Lage ist, zu bewirken, dass das jeweilige andere Ventil, das Primärdruckventil (16) oder das Sekundärdruckventil (18), eine gedachte, unbegrenzte hydraulische Verbindung zwischen der Hauptleitung (12) und dem Druckzylinder (7; 8), der jeweils dem anderen einen Ventil (16; 18) zugeordnet ist, bewirken kann.

4. Steuersystem nach Anspruch 1, 2 oder 3, **dadurch gekennzeichnet, dass** der Schalter (20) als ein Hydraulikventil (20) vorgesehen ist, das in der Lage ist, einen allgemeinen Steuerdruck (cPgen), der durch das allgemeine Ventilsteuermittel zwischen dem Primär- und dem Sekundärdruckventil (16, 18) erzeugt wird, zu schalten.

5. Steuersystem nach Anspruch 4, **dadurch gekennzeichnet, dass** das Schaltventil (20) mit zwei Hydrauliksteuerleitungen (20d, 20e) versehen ist, die jeweils eine Druckhöhe befördern, die gleich dem Primärdruck (Ppri) bzw. dem Sekundärdruck (Psec) ist oder ihn darstellt.

## Revendications

1. Système de commande pour une transmission à variation continue (1), avec un élément de transmission sans fin (4) enroulé autour d'une poulie variable primaire (5) et d'une poulie variable secondaire (6) de la transmission (1) et en contact de friction avec elles, chaque poulie (5, 6) comprenant deux rouets entre lesquels est maintenu l'élément de transmission (4), et dont l'un est agencé de manière axialement déplaçable le long d'un arbre de poulie respectif (2, 3) sous l'influence d'un moyen d'actionnement (7, 8) du système de commande qui comporte un cylindre de pression primaire (7) associé à la poulie primaire (5) et un cylindre de pression secondaire (8) associé à la poulie secondaire (6), le système de commande comportant en outre des moyens hydrauliques pour réaliser une pression hydraulique primaire (Ppri) dans le cylindre de pression primaire (7) et une pression hydraulique secondaire (Psec) dans le cylindre de pression secondaire (8), lesquels moyens hydrauliques comprennent :
- une pompe hydraulique (10) capable de fournir un flux de fluide à une ligne hydraulique principale (12) des moyens hydrauliques,
- une soupape de pression de ligne ajustable (13) capable de réguler une pression de ligne (Pline) dans la ligne principale (12),
- une soupape de pression primaire ajustable (16), interposée entre la ligne principale (12) et le cylindre de pression primaire (7) et capable de réguler la pression primaire (Ppri) et
- une soupape de pression secondaire ajustable (18) interposée entre la ligne principale (12) et le cylindre de pression secondaire (8) et capable de réguler la pression secondaire (Psec),
**caractérisé en ce que** le système de commande comporte en outre :
- un moyen de commande de soupape général servant à actionner une soupape de pression des moyens hydrauliques pour déterminer le niveau de pression réglé par celle-ci et
- un commutateur (20) capable de permettre, de manière sélective, au moyen de commande de soupape général de faire fonctionner l'une de la soupape de pression primaire (16) et de la soupape de pression secondaire (18).

2. Système de commande selon la revendication 1, **caractérisé en ce que** le commutateur (20) est prévu pour pouvoir être commuté au moins en fonction, et plus spécifiquement sous l'influence, d'un niveau actuel ou souhaité à la fois de pression primaire (Ppri ; sPpri) et de pression secondaire (Psec ; sPsec), plus spécifiquement en fonction de la différence entre elles.

3. Système de commande selon la revendication 1 ou 2, **caractérisé en ce que** le commutateur (20) est en outre capable de faire en sorte que l'autre, respective, de la soupape de pression primaire (16) et de la soupape de pression secondaire (18), fournisse une liaison hydraulique pratiquement libre entre la ligne principale (12) et le cylindre de pression (7 ; 8) qui est associé respectivement à ladite autre soupape (16 ; 18).

4. Système de commande selon la revendication 1, 2 ou 3, **caractérisé en ce que** le commutateur (20) est prévu sous forme de soupape hydraulique (20) qui est capable de commuter une pression de commande générale (cPgen) produite par le moyen de commande de soupape général entre les soupapes de pression primaire et secondaire (16, 18).

5. Système de commande selon la revendication 4, **caractérisé en ce que** la soupape de commutation (20) est pourvue de deux lignes de commande hydrauliques (20d, 20e) qui portent chacune un niveau de pression égal à, ou représentatif de, la pression primaire (Ppri) et la pression secondaire (Psec), respectivement.
